# EUROPEAN PATENT APPLICATION

(11) **EP 3 010 026 A1**
(43) Date of publication of application: **20.04.2016**
(21) Application number: 15187324.7
(22) Date of filing: 29.09.2015
(51) Int. Cl.: G21C 15/247, G21C 1/03

(54) **MECHANICAL COMPONENT**

(30) Priority: 17.10.2014 GB 201418397
(71) Applicant: Rolls-Royce plc, London SW1E 6AT (GB)
(72) Inventor: ALLISON, Claire, Derby, Derbyshire DE24 8BJ (GB)
(74) Representative: Rolls-Royce plc

(57) **Abstract**

This disclosure concerns reducing or elimination the build-up of coolant materials in in the fuel handling and component maintenance systems of nuclear reactors, thereby reducing or eliminating manual cleaning of said components. A mechanical component (2) for use within the handling route of the reactor is provided with drainage channels (8) to disperse coolant material deposited on the component. A heater (4) may also be employed to avoid the build-up.

## Description

The present disclosure relates to an apparatus and/or a method of reducing the build-up of deposited solidifying substances on surfaces or components, and/or a method of reducing the build-up of coolant metals in the fuel handling and component maintenance systems of liquid-metal cooled nuclear reactors.

### BACKGROUND

Various different coolants can be used in nuclear reactors, but generally cooling is achieved using either water or a liquid metal.

The relatively low boiling point of water means that it typically has to be used at high pressures. In a fast reactor, water has the further disadvantage of acting as a neutron moderator, undesirably slowing the fast neutrons.

Accordingly, cooling with liquid metals, such as liquid sodium, is preferred to water cooling in a number of cases. Liquid metal coolant metals tend to have a high heat capacity, which is of benefit in avoiding overheating of the system, and a boiling point considerably higher than that of water, so they need not be pressurised to cope with the reactor temperatures. In addition, metal coolants typically do not cause neutron moderation in the same way that water does.

A consequence of their beneficial high boiling points is that most metal coolants also have a high melting point, typically considerably higher than ambient temperature within a reactor building. This can lead to problems in situations where fuel assemblies, or other items, are moved from a liquid metal coolant pool to some other location. The items being moved will be coated with liquid metal coolant, for example liquid sodium, when they are removed from the coolant pool. This liquid metal coolant can be transported on the exterior surface of the item(s) and deposited over the handling route, either as liquid droplets directly from the surface of the item(s) or through evaporation followed by condensation, where it then solidifies.

This deposit of cooling metal can be particularly problematic if it occurs in areas where valves and other mechanical components of the handling systems are found. The mechanical operation of these valves and mechanisms can be inhibited when the deposited coolant solidifies on their moving parts. Problems encountered may include fouling of moving parts, clogging, or prevention of adequate valve seating.

One approach to reducing the problem of solidifying deposits is to use a coolant with a lower melting point. It has been known to use mercury as a coolant, but although liquid at room temperature it has numerous other drawbacks, including high toxicity, that make it unsuitable and/or undesirable.

Liquid sodium is a popular choice as a coolant because, in addition to the high boiling point and heat capacity mentioned above, it is non-corrosive to steel (commonly used in reactor plants) and is compatible with many nuclear fuels. In an attempt to lower its melting point, it is known to form a eutectic alloy with potassium (NaK) which exists as a liquid at room temperature. However, the NaK alloy is highly reactive, exacerbating one disadvantage of pure sodium as a coolant.

Even if the melting point of a coolant metal can be made sufficiently high that it does not freeze when deposited on components as set out above, fouling problems can still arise from solids formed by reaction products of the coolant metal.

For these reasons, the current solution to the clogging/fouling problem is often simply to periodically clean the affected valves, and other similar mechanisms or structures, when they become clogged by coolant metal deposits or their reaction products. The cleaning may be achieved by manual, remote or automated means.

However, cleaning is hazardous for the maintenance workers, due to the potential increased exposure to radiation sources and hazardous chemicals, and is also expensive and time consuming. Furthermore, routine maintenance may lead to unnecessary down-time during the plant's operation, which is unacceptable for an energy provider. As such, it would be preferable if the need for such cleaning could be avoided, or at least minimised.

### SUMMARY

It is an aim of the present disclosure is to reduce or avoid the build-up of coolant deposits such that physical cleaning of components can be minimised or avoided.

In a first aspect there is provided a mechanical component, such as a valve, for use within the handling route of a nuclear reactor (e.g. a nuclear reactor that uses a liquid metal coolant). The mechanical component comprises one or more recessed drainage channels provided in at least one surface of the component to encourage coolant material deposited on the mechanical component to flow away from said at least one surface under the influence of gravity.

The mechanical component may be for use in a liquid-metal cooled nuclear reactor. The one or more drainage channels on the component can guide the liquid metal away from sensitive areas before it solidifies. The mechanical component thus encourages run-off of any coolant metal deposits, such that deposited material flows away from the areas it could otherwise clog. By quickly guiding the deposited away from sensitive areas, the chance of reaction products forming is also reduced. This is significant because reaction products can be more difficult to remove than the deposited metal itself.

Automatic cleaning and de-clogging of mechanical valves and similar mechanical systems through which fuel assemblies or other liquid metal coated items pass, without the need for manual involvement, is highly beneficial. It reduces the risk of workers' exposure to hazardous radiation environments, and is also economically advantageous as less manual maintenance and associated off-line time is required. System functionality can therefore be preserved with minimal requirement for manual input or maintenance.

At least a portion of the component may have a surface that in use extends generally vertically, and the at least one drainage channel may be provided on the generally vertical surface to encourage flow away from the generally vertical surface. The at least one drainage channel may comprise, for example, an angled channel running diagonally across a flat wall surface or a helical channel provided on cylindrical wall surface.

The run-off/drainage channels may coalesce into a single channel, so as to bring the liquid metal droplets together as effectively and quickly as possible. This is beneficial as larger drops of a liquid will form and flow downwards more readily under the effect of gravity, further accelerating removal of the coolant and further reducing the chance of reaction products forming. Accordingly, a drainage gulley (e.g. a generally vertical drainage gulley) may be provided (e.g. on the generally vertical surface), the drainage gulley intersecting the or each drainage channel.

At least one drainage channel may alternatively, or additionally, be provided as a sloping channel in a surface of the component that in use is generally horizontal. The sloping channel may extend to a drainage gulley, e.g. a drainage gulley that in use extends generally vertically.

The component may comprise a sloping floor. The sloping floor may extend to a drainage gulley, e.g. a drainage gulley that in use extends generally vertically. Provision of a sloping floor can avoid build-up on a flat floor of the component.

The component may comprise a sloping top surface (e.g. a surface of the component that in use forms an upper surface of the component) to avoid build-up on a top surface of the component. The sloping top surface may comprise a slope in just one direction, or in more than one direction, and may encourage flow towards the one or more drainage channels provided on the component.

To assist the flow of coolant material, for example in circumstances where a component has a relatively low operating temperature and/or where a coolant has a relatively high melting point, an integrated heater may be provided for heating at least part of the component. The heater could be employed to melt solid coolant, prevent solidification of the coolant, or merely to maintain a low viscosity of the coolant to ensure smooth flow.

The heater may comprise one or more of electrical heaters, heated fluid flow through channels in the component structure, and heated gas circulation. Electrical heaters may comprise, for example, electrical trace heating (which could be external, sandwiched or internal). Heated gas circulation would typically, but not necessarily, comprise circulation of a hot inert gas, and could in particular be used to heat internal parts of the component if required.

In a second aspect there is provided a method of reducing build-up of coolant materials on mechanical components within the handling route of a nuclear reactor. The method comprises installing a mechanical component according to the first aspect, the mechanical component having a heater, in the handling route of a nuclear reactor and heating said component with said heater.

The component may be permanently heated with at least one heater to prevent solidification of coolant or to keep its viscosity low.

Alternatively, the component may be heated periodically by at least one heater to maintain the component within a temperature range without permanent heating or to melt coolant at predetermined intervals.

Alternatively, the component may heated selectively by at least one heater so that heating is only applied when deemed necessary, for example just prior to, during, and/or immediately after movement of items from a coolant pool along the handling route of the reactor.

Alternatively, a combination of the above heating controls could be used. For example, a low level of heating could be permanently or periodically applied to raise the base temperature of a component, and this could be augmented by additional heating applied periodically or at specific times when required. The 'base' level of heating would be selected to be sufficient to maintain coolant in a low viscosity liquid form for long enough that it would flow away from sensitive parts of the component in most circumstances. However, additional heating would be available and could be applied should circumstances require it. The 'base' heating and additional heating could be applied by other types of heaters or, where more than one heater is present, by different types of heaters.

The method may include heating of the walls of a component, for example a valve. The system of drainage channels and gullies incorporated in the affected surfaces of the valve or similar mechanism then facilitate the runoff of the recently liquefied coolant metal, to a location where it no longer causes problems.

Wherever practicable, any of the optional features defined in relation to any one aspect of the disclosure may be applied to any further aspect. Accordingly the disclosure may include various alternative configurations of the features defined above.

### BRIEF DESCRIPTION OF THE DRAWINGS

Practicable embodiments are described in further detail below by way of example only with reference to the accompanying drawings, of which:
Fig. 1 shows a schematic representation of a valve with flat walls;
Fig. 2 shows a schematic representation of a valve with a cylindrical geometry;
Fig. 3a is a diagram illustrating a cross section view of a drainage and heating system applied to the floor of a valve;
Fig 3b is a diagram illustrating a cross section view of an alternative drainage and heating system applied to the floor of a valve;
Fig. 4a is a schematic representation of a sloping top surface of a component;
Fig. 4b is a schematic representation of an alternative sloping top surface of a component; and
Fig. 5 is a schematic representation of the embodiment of Fig. 2 incorporating a sloping top surface.

### DETAILED DESCRIPTION

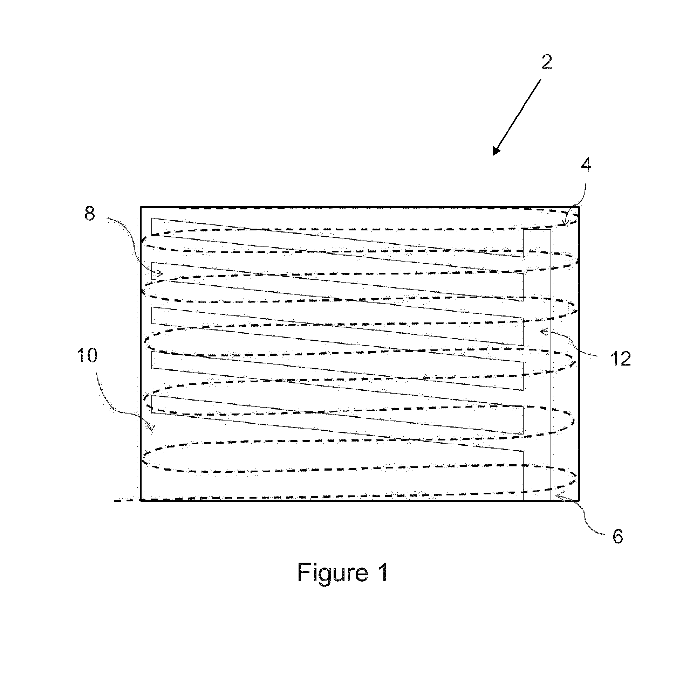

Figure 1 illustrates a valve or similar mechanism or component with flat walls. The valve 2 is shown schematically in Figure 1, along with a heating system 4 and a drainage system 6.

In the illustrated embodiment, the heating system 4 includes an electrical trace heater element, which follows the path illustrated by a broken line. The heater element 4 is incorporated on an external wall of the valve 2, close to the wall surface, to facilitate heating and melting of any solidified material, such as coolant metal, or maintenance of it in an already liquid state.

The drainage system 6 comprises a number of angled drainage channels 8 and a single vertical drainage gully 12, all provided in the wall 10 of the valve 2. Each of the angled drainage channels 8 has an upper end, and a lower end joined to the vertical drainage gulley 12. This channel geometry encourages droplets of liquid metal to collect and coalesce, thus creating the conditions in which droplets can flow downwards under the force of gravity.

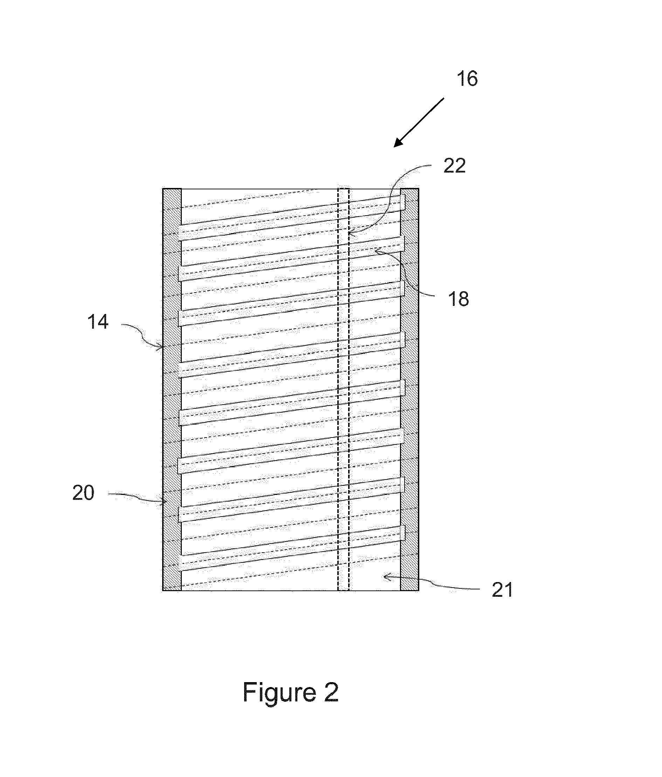

For a valve or similar mechanism with a cylindrical geometry, similar results could be achieved by running the drainage channels in a helical shape along the inside of the valve, as illustrated in Figure 2.

Figure 2 shows a cross section of a cylindrical valve. As in Figure 1, the path 14 of an electrical trace heater is illustrated by a broken line. In this embodiment, the trace heater 14 is wound in a helically shaped configuration around the external wall of the valve 16 shown in cross-section in Figure 2.

Instead of the simple sloping drainage channels 8 of Figure 1, the embodiment of Figure 2 incorporates a helical drainage channel 18 formed in the inside surface 21 of the cylindrical wall 20 of the valve 16.

A vertical gulley 22, similar to the vertical gulley 12 from Figure 1, is also shown. However, the vertical gulley may optionally not be provided, in particular when a continuous helical drainage channel 18 is provided, and hence the vertical gulley 22 is shown in broken lines. Nonetheless, the inclusion of the vertical gulley 22 provides a shorter, more direct, path for liquid metal to disperse from the valve 16.

Figures 1 and 2 serve to illustrate how the present disclosure may be implemented to reduce build-up of deposits on the, substantially vertical, walls of a valve or similar component. In addition, it is beneficial to include sloping drainage channels in any horizontal surfaces within a valve or similar mechanism.

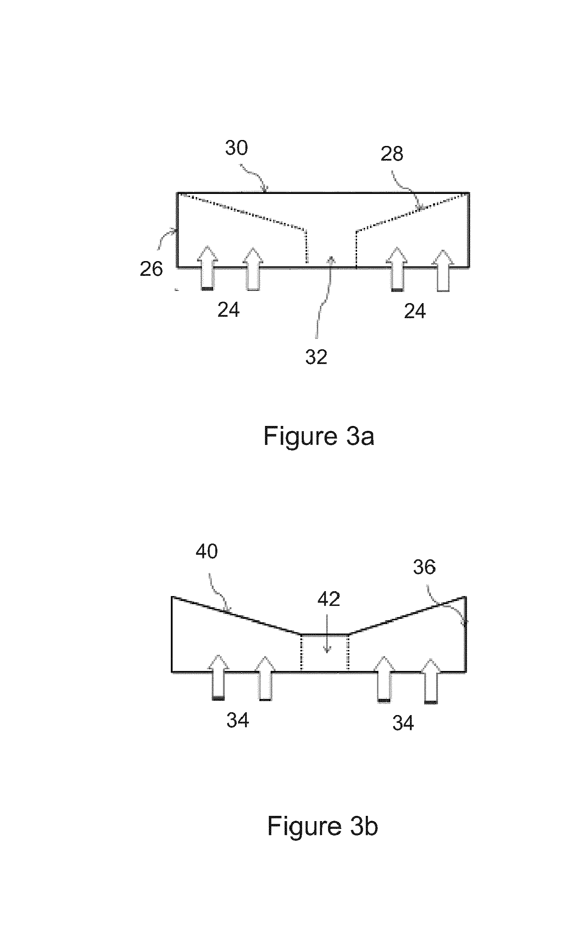

Figure 3a shows the floor 30 of a valve with sloping drainage channels 28 and a vertical drainage gulley 32 cut into the horizontal flat floor 30. The sloping drainage channels 28 guide the flow of liquid materials towards the vertical drainage gulley as before. Heat 24 is applied to the remaining part 26 of the valve in order to melt deposited material or maintain it in a liquid state as in the other embodiments. Heating may be via a trace heater as before, or through another heater arranged for direct heating or circulation of a hot inert gas.

As an alternative to cutting channels in a valve floor 30, a sloping base or floor could be incorporated into the valve. This is illustrated in Figure 3b. It should be clear that the floor 40 of the valve incorporates a slope, such that there is no need to cut sloping drainage channels 28 as in the embodiment of Figure 3a. A vertical drainage gulley 42 is provided, and heat 34 is applied to the remaining part 36 of the valve as before.

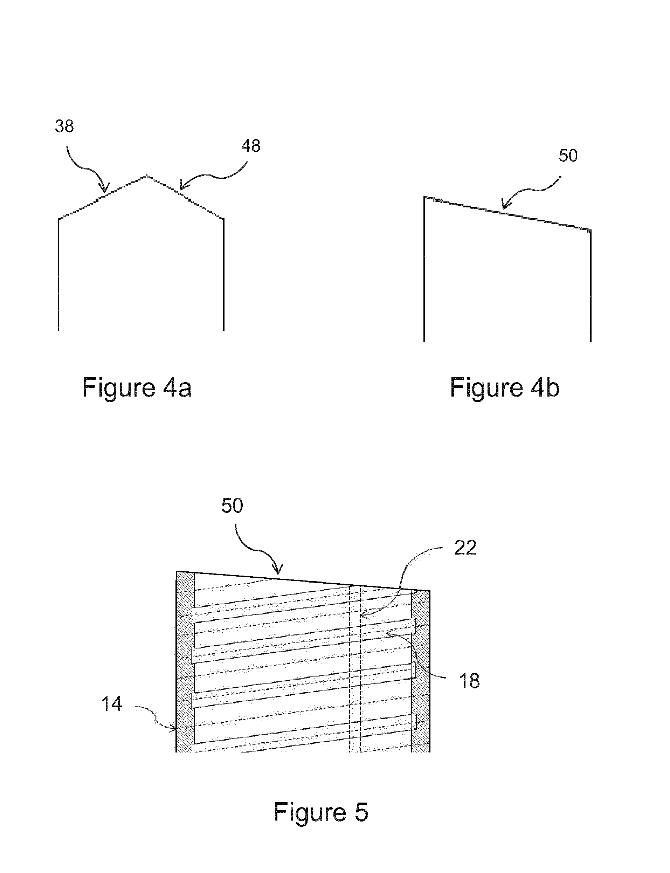

A sloping top surface may also be incorporated to prevent build-up of deposits on the top/upper surface of a component. Exaggerated examples of this are shown schematically in Figures 4a and 4b. Figure 4 a shows the surface sloped in two opposing directions 38,48, whereas in Figure 5 a single sloping top surface 50 is provided.

Figure 5 shows the sloping top surface 50 of Figure 4a applied to the cylindrical valve of Figure 2. The heating trace 14 helical drainage channel 18 and vertical drainage gulley 22 are as before, but the top surface 50 of the valve now slopes towards the uppermost end of the helical drainage channel to help guide any deposited material towards and into the channel 18.

Although all the illustrated embodiments show both drainage channels and heater, in certain circumstances it will be sufficient to merely provide one or more drainage channels on a component to guide the liquid metal away from sensitive areas before it solidifies. This could be the case where a component has a sufficiently high normal operating temperature that solidification of the coolant is prevented or slowed to a suitable degree, or where a liquid metal coolant with a low melting point is used. The drainage channels would guide or encourage flow of the liquid coolant away from the areas liable to clogging before any reaction products have a chance to form.

Where a component has a lower operating temperature, or where a coolant has a higher melting point, the inclusion of heating allows the component to actively prevent or slow the solidification by heating the component in question. It is envisaged that the heating element, or alternative types of heaters, will be operated cyclically at predetermined intervals or after items have been moved from the coolant pool to melt the deposited coolant periodically as required. However, it is also possible that the heaters could be permanently on to help avoid any build-up of solidified coolant.

For some mechanisms, in particular where the issue is fouling of moving parts rather than inadequate valve seating, it may be necessary to add an additional heating system to the internal parts, for example by direct internal heating or by the circulation of hot inert gas. This will encourage drip-off of any coolant metal that has gathered in the internal parts.

The described components provide a simple, effective and potentially maintenance-free technique for removing the problematic coolant metal deposits from valves and similar mechanical systems which the fuel assembly or other liquid metal coated items pass through. By ensuring that coolant metal deposits in the vicinity are heated to above their melting points, and/or by providing pathways that encourage droplets to coalesce and flow under the action of gravity, the coolant metal deposits naturally flow away from the areas they could otherwise clog.

Although derived as a solution to a problem that exists with coolant metals used in nuclear reactors, the principles underlying the invention could be equally applicable in other areas. Indeed, the invention could be applied in any field wherein heated substances coat surfaces and then solidify at ambient temperatures, causing blockages or fouling, especially of mechanisms or valves. For example, the system could be used in an injection moulding process, for example to remove wax or plastic deposits from mechanisms outside a mould; or in food preparation, for example to remove foods such as chocolate from piping and valves.

## Claims

1. A mechanical component, such as a valve, for use within the handling route of a nuclear reactor that uses a liquid metal coolant, the mechanical component comprising:
a heater for heating at least part of the mechanical component for melting deposited coolant material; and
one or more drainage channels provided in at least one surface of the component to encourage coolant material deposited on the mechanical component to flow away from said at least one surface under the influence of gravity.

2. A mechanical component according to claim 1, wherein the one or more drainage channels comprises an angled channel running diagonally across a wall surface of the component.

3. A mechanical component according to claim 1 or 2, comprising a cylindrical wall surface and the one or more drainage channels comprises a helical channel provided on the cylindrical wall surface.

4. A mechanical component according to any of the preceding claims, further comprising a drainage gulley, the drainage gulley intersecting the or each drainage channel, and the drainage gulley being arranged such that during intended use the drainage gulley extends generally vertically.

5. A mechanical component according to any of the preceding claims, wherein the component comprises a sloping floor leading to a drainage gulley.

6. A mechanical component according to any of the preceding claims, wherein a surface of the component that in use forms an upper surface of the component is angled so as to be sloped downwardly in use.

7. A mechanical component according to any one of the preceding claims, wherein the heater is an electrical heater.

8. A mechanical component according to claim 7, wherein the electrical heater comprises an electrical trace heater.

9. A mechanical component according to any one of the preceding claims, wherein the heater comprises channels through which heated fluid can flow.

10. A mechanical component according to any one of the preceding claims, wherein the heater comprises heated gas circulation.

11. A mechanical component according to claim 10, wherein the gas circulation is internal to the component.

12. A method of reducing build-up of coolant materials on mechanical components within the handling route of a nuclear reactor, the method comprising installing a mechanical component according to any one of the previous claims along the handling route of a nuclear reactor and heating said component with said heater.

13. A method according to claim 12, wherein said component is permanently heated with at least one heater.

14. A method according to claim 12 or 13, wherein said component is heated periodically by at least one heater.

15. A method according to any of claims 12 to 14, wherein said component is heated selectively by at least one heater.
